# EUROPEAN PATENT APPLICATION

(11) **EP 4 468 045 A1**
(43) Date of publication of application: **27.11.2024**
(21) Application number: 23743157.2
(22) Date of filing: 12.01.2023
(51) Int. Cl.: G02B 6/12, G02B 6/122

(54) **OPTICAL MULTIPLEXER**

(30) Priority: 18.01.2022 JP 2022005883
(71) Applicant: Seiren Kst Corp., Fukui-shi, Fukui 918-8135 (JP)
(72) Inventor: YABE, Yuuta, Fukui-shi, Fukui 918-8135 (JP); HIMENO, Akira, Fukui-shi, Fukui 918-8135 (JP); HORII, Koichi, Fukui-shi, Fukui 918-8135 (JP); KAWASAKI, Osamu, Fukui-shi, Fukui 918-8135 (JP); IWABATA, Kazuki, Fukui-shi, Fukui 918-8135 (JP); KAMEI, Yojiro, Fukui-shi, Fukui 918-8135 (JP); YOSHIDA, Tetsufumi, Fukui-shi, Fukui 918-8135 (JP)
(74) Representative: Müller-Boré & Partner Patentanwälte PartG mbB
(86) International application number: PCT/JP2023/000522
(87) International publication number: WO 2023/140162

(57) **Abstract**

The present invention provides an optical multiplexer that can be downsized and includes a directional coupler capable of being fabricated with stable quality and accuracy. The present invention further provides an image projector including the optical multiplexer. The optical multiplexer includes: input waveguides for respectively receiving a plurality of visible light beams of different wavelengths; a directional coupler for multiplexing the plurality of visible light beams; and an output waveguide for outputting the multiplexed light. At least one of the input waveguides connected to the directional coupler and the output waveguide have a tapered structure. Therefore, the optical multiplexer can be downsized by reducing its overall length and can be fabricated with stable quality and accuracy by reducing a decrease in multiplexing efficiency caused by an error in the width of an optical coupling waveguide.

## Description

### Technical Field:

The present invention relates to an optical multiplexer that includes waveguides for respectively receiving a plurality of visible light beams of different wavelengths, a directional coupler for multiplexing the plurality of visible light beams, and a waveguide for outputting the multiplexed light. In the optical multiplexer, at least one of the input waveguides connected to the directional coupler and the output waveguide have a tapered structure.

### Background Art:

In recent years, it has been known to use an optical multiplexer in image projectors such as an eye-wear and a portable projector. The optical multiplexer multiplexes visible light from a plurality of laser diodes as light sources through waveguides and outputs the multiplexed light (see Patent Document 1.) Such an optical multiplexer is fabricated through the following steps: forming a low refractive index cladding silicon oxide layer on a silicon substrate and depositing a high refractive index silicon oxide core layer by a known method such as chemical vapor deposition (CVD) or sputtering; patterning the high refractive index silicon oxide core layer into waveguides and directional couplers by photolithography using a photomask; and over-cladding another low refractive index silicon oxide layer.

In order for the above-described optical multiplexer to be embedded into eyeglass temples or the like, it is desired to be smaller than the temples. Further, the directional couplers, which constitute the optical multiplexer, need to be fabricated within a tight tolerance, resulting in a reduction in yield (see Patent Document 2.) Thus, stable quality and accuracy are required in the fabrication of the directional couplers.

### Prior Art Documents:

### Patent Documents:

Patent Document 1: JP-A-2013-195603
Patent Document 2: JP-A-2019-035876

### Summary of the Invention:

### Problems to be solved by the Invention:

The present invention has been made in view of the aforementioned circumstances and provides an optical multiplexer that can be downsized and includes a directional coupler capable of being fabricated with stable quality and accuracy. The present invention further provides an image projector including the optical multiplexer.

### Means for solving the Problems:

The present invention provides an optical multiplexer including: input waveguides for respectively receiving a plurality of visible light beams of different wavelengths; a directional coupler for multiplexing the plurality of visible light beams; and an output waveguide for outputting the multiplexed light. In the optical multiplexer, at least one of the input waveguides connected to the directional coupler and the output waveguide have a tapered structure.

The tapered structure as used herein refers to the structure in which the width of the waveguide is gradually reduced or increased while the thickness of the waveguide is kept constant.

The tapered structure is preferably provided in a curved section of the waveguides.

The waveguides in an optical coupling section of the directional coupler preferably have a width of 0.8 to 1.4 µm.

The plurality of visible light beams of different wavelengths preferably include at least a red light beam, a green light beam, and a blue light beam.

The present invention provides an image projector including the optical multiplexer.

### Effect of the Invention:

The present invention can provide a small optical multiplexer available for use in image projectors, such as an eye-wear and a portable projector. As necessary, the optical multiplexer of the present invention can have other uses than the above, such as lighting and backlight purposes; however, it is preferably used in the image projectors, such as an eye-wear and a portable projector.

### Brief Description of the Drawings:

[Fig. 1]: a schematic view of a conventional directional coupler;
[Fig. 2]: a schematic view of a directional coupler in the present invention;
[Fig. 3]: a diagram showing the intensities of light beams respectively propagating through directional couplers that differ in waveguide width but have the same distance between the inner surfaces of optical coupling waveguides;
[Fig. 4] : a diagram showing the relationship between the length and width of the optical coupling waveguide in the present invention when the distance between the centers of the optical coupling waveguides is fixed to 2.8 µm;
[Fig. 5] : views for explaining an optical multiplexer of Example 1;
[Fig. 6]: views for explaining an optical multiplexer of Comparative Example 1;
[Fig. 7] : a diagram showing the relationship between an error in the width of the waveguide and multiplexing efficiency in Example 1; and
[Fig. 8] : a diagram showing the relationship between an error in the width of the waveguide and multiplexing efficiency in Comparative Example 1.

### Mode for Carrying out the Invention:

Hereinafter, an Example for carrying out the present invention will be described with reference to the drawings . The present invention is not limited to this example.

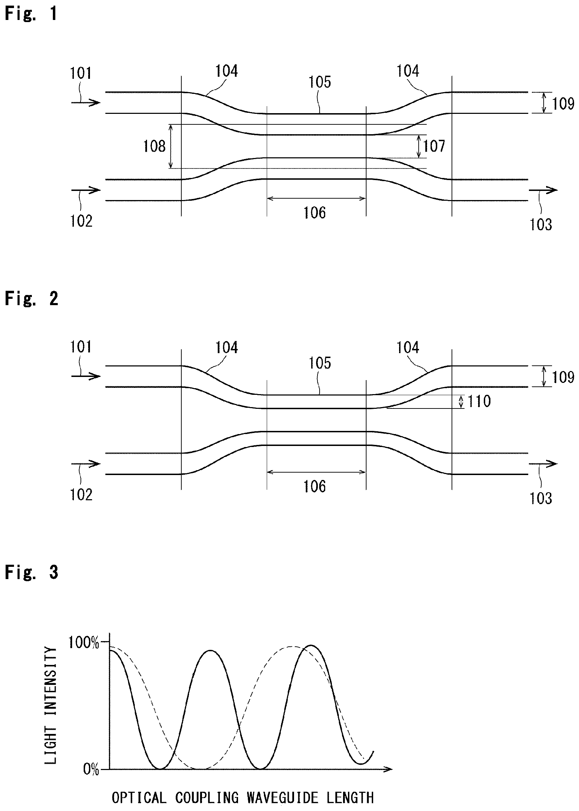

Fig. 1 is a schematic view of a conventional directional coupler. A light beam 101 of a wavelength 1 and a light beam 102 of a wavelength 2 different from the wavelength 1 are input to respective waveguides from the left and guided through curved sections 104 to optical coupling waveguides 105. Each of the two optical coupling waveguides 105 is square or rectangular in cross-section. The two optical coupling waveguides have a length 106 and are located with a distance 107 between the inner surfaces of the optical coupling waveguides and a distance 108 between the centers of the optical coupling waveguides. The waveguides have a width 109, which is constant throughout their length.

Since the two optical coupling waveguides 105 are located closely adjacent to each other, the two light beams of the different wavelengths pass through between their own waveguides and each other's waveguides. Thereafter, these light beams are multiplexed into a multiplexed light beam 103 and output. As used herein, the term "multiplexed" refers to the state in which two or more light beams of different wavelengths are coupled and mixed in a single waveguide.

Fig. 2 is a schematic view of a directional coupler in the present invention. The waveguides have curved sections 104 with a tapered structure in which the waveguides vary in width. Each of the optical coupling waveguides 105 has a width 110 that is smaller than the width 109 of a light input section and a light output section of the waveguide. Fig. 2 omits the illustration of the distance 107 between the inner surfaces of the optical coupling waveguides and the distance 108 between the centers of the optical coupling waveguides.

Fig. 3 is a diagram showing the repetition period of the intensity wave of light (propagating light intensity wave) propagating through the optical coupling waveguide 105 in the directional coupler in Fig. 2. The vertical axis shows the value of light intensity, the maximum of which is 100%. The horizontal axis shows the length 106 of the optical coupling waveguide. The solid line indicates the case where the distance 107 between the inner surfaces of the optical coupling waveguides is 1.0 µm, the width 109 of the optical coupling waveguide is 1.2 µm, and the distance 108 between the centers of the optical coupling waveguides is 2.2 µm. The dashed line indicates the case where the distance 107 is 1.0 µm, the width 109 is 1.8 µm, and the distance 108 is 2.8 µm. In either case, the distance 107 is fixed to 1.0 µm. The propagating light intensity wave is simulated by the beam propagation method (BPM), which is a well-known electromagnetic field analysis method.

Here, the following relational expression holds: "Distance 107 between inner surfaces of optical coupling waveguides" + "Width 109, 110 of optical coupling waveguide" = "Distance 108 between centers of optical coupling waveguides".

When the light intensity is at its maximum value (100%), 100% of the input light is propagating not through its own waveguide but through an adjacent waveguide. When the light intensity is at its minimum value (0%), 100% of the input light is propagating through its own waveguide without traveling to an adjacent waveguide.

When the width 109, 110 of the optical coupling waveguide is reduced while the distance 107 between the inner surfaces of the optical coupling waveguides is kept constant, the distance 108 between the centers can be reduced, which allows the repetition period of the wave of the propagating light intensity in the optical coupling waveguide 105 to be shorter as shown in Fig. 3. Thus, this can lead to a reduction in the length of the directional coupler.

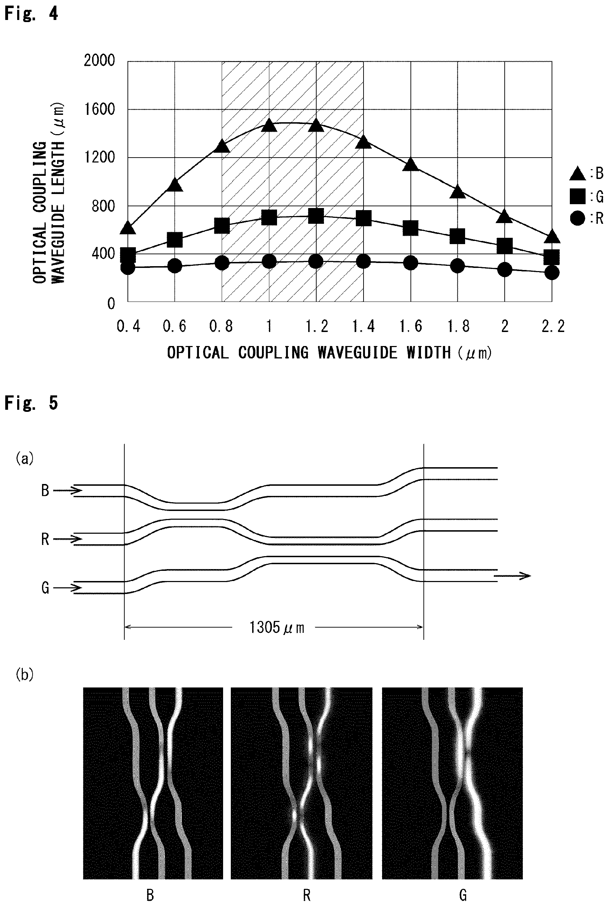

Fig. 4 shows a simulated relationship between the length 106 and width 109, 110 of the optical coupling waveguide 105 in the directional coupler in Fig. 2 for a blue light beam (B), a green light beam (G) and a red light beam (R), when the distance between the centers of the optical coupling waveguides is fixed to 2.8 µm. Here, it is taken as given that the waveguide has a thickness of 1.6 µm and that the refractive index difference between the waveguide (high refractive index silicon oxide) and the surrounding clad (low refractive index silicon oxide) is 1.1%.

When the width of the optical coupling waveguide is in a range of 0.8 to 1.4 µm, the length of the optical coupling waveguide varies less. This shows that the optical coupling waveguide with a width in this range has a large margin for manufacturing error in its length. Thus, the optical coupling waveguide preferably has a width of 0.8 to 1.4 µm, more preferably 1.0 to 1.2 µm.

The waveguide in the present invention preferably has a thickness of 1.0 to 3.0 µm, more preferably 1.2 to 2.5 µm, and still more preferably 1.4 to 2.0 µm.

The refractive index difference in the present invention is preferably 0.5% to 2.0%, more preferably 0.7% to 1.8%, and still more preferably 1.0% to 1.5%.

If the waveguide thickness is less than 1.0 µm, or the refractive index difference is less than 0.5%, the practical function of the waveguide is impaired. For example, the waveguide becomes less likely to confine propagating light and difficult to bend with light confined therein. Further, the waveguide suffers an increased loss due to sensitivity to a minute structural defect. In contrast, if the waveguide thickness is more than 3.0 µm, or the refractive index difference is more than 2.0%, the waveguide does not operate in single-mode but functions as a multi-mode waveguide through which multi-mode light propagates. In a multi-mode waveguide, coupling characteristics greatly vary among respective modes, which makes it difficult to control the power proportion of propagating light of each of the modes. Thus, such a multi-mode waveguide is difficult to use in the field where the directional coupler as in the present invention is used.

### Examples

Fig. 5 (a) is a view of an optical multiplexer of Example 1 of the present invention. Three waveguides, each having a width of 1.8 µm, receive, in the order from top to down, a blue light beam (B), a red light beam (R) and a green light beam (G), respectively, from the left. Initially, the waveguides for the blue light beam (B) and the red light beam (R) are changed in width from 1.8 to 1.2 µm due to a tapered structure provided in curved sections of the waveguides. This allows the blue light beam (B) and the red light beam (R) to be multiplexed by a first directional coupler in which optical coupling waveguides have a width of 1.2 µm and the distance between the inner surfaces of the optical coupling waveguides is 1.0 µm. Then, the waveguide for the green light beam (G) is changed in width from 1.8 to 1.2 µm due to a tapered structure provided in a curved section of the waveguide. This allows the green light beam (G) to be multiplexed with the aforementioned multiplexed light by a second directional coupler in which the optical coupling waveguides have a width of 1.2 µm and the distance between the inner surfaces of the optical coupling waveguides is 1.0 µm. Finally, the undermost waveguide is changed in width from 1.2 to 1.8 µm due to a tapered structure, and outputs the multiplexed light of the blue light beam (B), the red light beam (R) and the green light beam (G) from the right. This optical multiplexer can have an overall length of 1305 µm. The tapered structure may be provided in a straight section of the waveguides, but is preferably provided in the curved section so as to reduce the overall length of the optical multiplexer.

Here, a description will be given of the shape of the waveguide for the red light beam (R) in Fig. 5(a). In a connection section of this waveguide between the output side of the first directional coupler and the input side of the second directional coupler, the waveguide may be changed in width from 1.2 to 1.8 µm and from 1.8 to 1.2 µm so that the waveguide has a symmetric tapered structure between the input and output sides of each of the directional couplers. However, such a symmetric tapered structure increases the length of the connection section. To avoid this, the waveguide may have an asymmetric tapered structure between the input and output sides of each of the directional couplers by, for example, allowing the connection section to have a width of 1.2 µm. In Fig. 5(a), the connection section of the waveguide has a width that varies from 1.2 to 1.5 µm and then to 1.2 µm again, allowing the waveguide to have an asymmetric shape. When the optical multiplexer uses a plurality of the directional couplers, the waveguide preferably has an asymmetric shape between the input and output sides of each of the directional couplers, instead of allowing the connection section between the respective directional couplers to have a symmetric tapered structure. This allows the directional coupler to be fabricated with stable quality and accuracy and enables the downsizing of the optical multiplexer.

Fig. 5(b) shows simulated optical coupling of the red light beam (R), the green light beam (G) and the blue light beam (B) in Fig. 5 (a), which are input from the lower side and output from the upper side.

In the optical multiplexer in Example 1, the output intensities of the red light beam (R), the green light beam (G) and the blue light beam (B), relative to the input light intensities which are assumed to be 100%, are 99%, 93% and 95%, respectively.

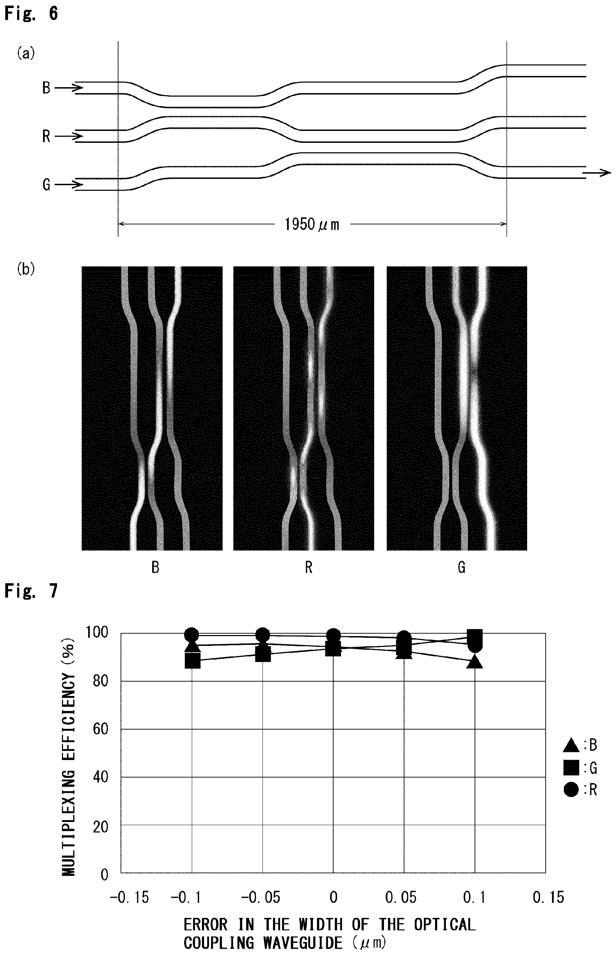

Fig. 6(a) is a view of an optical multiplexer of Comparative Example 1 in which waveguides have a width of 1.8 µm throughout their length, while the distance between the inner surfaces of optical coupling waveguides is the same as that in Example 1. Fig. 6(b) shows simulated optical coupling. This multiplexer can have an overall length of 1950 µm.

In the optical multiplexer in Comparative Example 1, the output intensities of a red light beam (R), a green light beam (G) and a blue light beam (B), relative to the input light intensities which are assumed to be 100%, are 87%, 85% and 87%, respectively.

As can be understood from a comparison of Figs. 5 and 6, the optical multiplexer in Example 1 can have a shorter overall length and achieve higher output light intensities relative to the input light intensities than in Comparative Example 1, because the distance between the centers of the optical coupling waveguides can be reduced by the use of the narrower waveguides in Example 1.

Fig. 7 shows the relationship between an error in the width of the optical coupling waveguide and multiplexing efficiency in Example 1 where the width of the optical coupling waveguide is set to 1.20 µm. A negative error indicates a smaller-than-expected width, and a positive error indicates a larger-than-expected width. It is shown that the multiplexing efficiency is 88% or more when the width has an error of + 0.10 µm.

The multiplexing efficiency as used herein refers to the output light intensity, relative to the input light intensity, of each of a plurality of visible light beams of different wavelengths that are input to the waveguides and output as multiplexed light. The output light intensity is expressed as a percentage of the input light intensity which is assumed to be 100%.

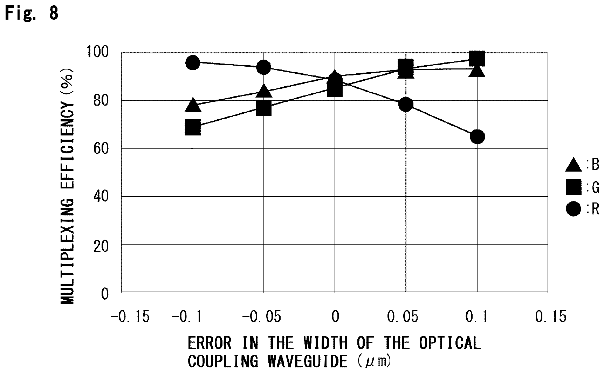

Fig. 8, just like Fig. 7, shows the relationship between an error in the width of the optical coupling waveguide and multiplexing efficiency in Comparative Example 1 where the width of the optical coupling waveguide is set to 1.80 µm. It is shown that the multiplexing efficiency is 65% or more when the width has an error of ±0.10 µm.

As can be understood from a comparison of Figs. 7 and 8, the error in the width of the optical coupling waveguide in Example 1 causes a smaller decrease in multiplexing efficiency than in Comparative Example 1. Thus, stable quality and accuracy can be achieved.

## Claims

1. An optical multiplexer comprising: input waveguides for respectively receiving a plurality of visible light beams of different wavelengths; a directional coupler for multiplexing the plurality of visible light beams; and an output waveguide for outputting the multiplexed light, wherein
at least one of the input waveguides connected to the directional coupler and the output waveguide have a tapered structure.

2. The optical multiplexer according to claim 1, wherein the tapered structure is provided in a curved section of the waveguides.

3. The optical multiplexer according to claim 1 or 2, wherein the waveguides in an optical coupling section of the directional coupler have a width of 0.8 to 1.4 µm.

4. The optical multiplexer according to any one of claims 1 to 3, wherein the plurality of visible light beams of different wavelengths include at least a red light beam, a green light beam, and a blue light beam.

5. An image projector comprising the optical multiplexer according to any one of claims 1 to 4.
